(19) Europäisches Patentamt
European Patent Office
Office européen des brevets

(11) **EP 3 899 809 B1**

(12) **EUROPÄISCHE PATENTSCHRIFT**

(45) Veröffentlichungstag und Bekanntmachung des Hinweises auf die Patenterteilung:
**18.06.2025   Patentblatt 2025/25**

(21) Anmeldenummer: **19813459.5**

(22) Anmeldetag: **28.11.2019**

(51) Internationale Patentklassifikation (IPC):
*G06N 3/084* (2023.01)

(52) Gemeinsame Patentklassifikation (CPC):
**G06N 3/084**

(86) Internationale Anmeldenummer:
**PCT/EP2019/082838**

(87) Internationale Veröffentlichungsnummer:
**WO 2020/126379 (25.06.2020 Gazette 2020/26)**

(54) **VERFAHREN UND VORRICHTUNG ZUM KLASSIFIZIEREN VON SENSORDATEN UND ZUM ERMITTELN EINES ANSTEUERSIGNALS ZUM ANSTEUERN EINES AKTORS**

METHOD FOR TRAINING A NEURAL NETWORK

PROCÉDÉ À L'APPRENTISSAGE D'UN RÉSEAU NEURONAL

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität:   19.12.2018  DE 102018222346
                  01.10.2019  DE 102019215120

(43) Veröffentlichungstag der Anmeldung:
**27.10.2021   Patentblatt 2021/43**

(73) Patentinhaber: **Robert Bosch GmbH**
**70442 Stuttgart (DE)**

(72) Erfinder:
• **SCHMIDT, Frank**
**70439 Stuttgart (DE)**
• **SACHSE, Torsten**
**71272 Renningen (DE)**

(56) Entgegenhaltungen:
DE-A1- 19 653 554

• ELAD HOFFER ET AL: "Norm matters: efficient and accurate normalization schemes in deep networks", ARXIV.ORG, CORNELL UNIVERSITY LIBRARY, 201 OLIN LIBRARY CORNELL UNIVERSITY ITHACA, NY 14853, 5 March 2018 (2018-03-05), XP081020942

• JIMMY LEI BA ET AL: "Layer Normalization", ARXIV.ORG, CORNELL UNIVERSITY LIBRARY, 201 OLIN LIBRARY CORNELL UNIVERSITY ITHACA, NY 14853, 21 July 2016 (2016-07-21), XP080714068

• DEVANSH ARPIT ET AL: "Normalization Propagation: A Parametric Technique for Removing Internal Covariate Shift in Deep Networks", ARXIV:1603.01431V6, 12 July 2016 (2016-07-12), XP055472913, Retrieved from the Internet <URL:https://arxiv.org/abs/1603.01431v6> [retrieved on 20180504]

• YANG YOU ET AL: "LARGE BATCH TRAINING OF CONVOLUTIONAL NETWORKS", 13 July 2017 (2017-07-13), pages 1 - 8, XP055668291, Retrieved from the Internet <URL:https://arxiv.org/pdf/1708.03888.pdf> [retrieved on 20200213]

• FENG WANG ET AL: "NormFace : L 2 Hypersphere Embedding for Face Verification", 26 July 2017 (2017-07-26), pages 1 - 11, XP055669589, Retrieved from the Internet <URL:https://arxiv.org/pdf/1704.06369.pdf> [retrieved on 20200218]

• SERGEY IOFFE ET AL: "Batch Normalization: Accelerating Deep Network Training by Reducing Internal Covariate Shift", PROCEEDINGS OF MACHINE LEARNING RESEARCH (PMLR), PROCEEDINGS OF THE INTERNATIONAL CONFERENCE ON MACHINE LEARNING (ICML 2015), vol. 37, 7 July 2015 (2015-07-07), pages 448 - 456, XP055490336

EP 3 899 809 B1

**Beschreibung**

Die Erfindung betrifft ein Verfahren zum Klassifizieren von Eingangssignalen, ein Verfahren zum Bereitstellen eines Ansteuersignals, ein Computerprogramm, ein Maschinenlesbares Speichermedium und ein Aktorsteuerungssystem.

Stand der Technik

Aus "Improving neural networks by preventing co-adaptation of feature detectors", arXiv preprint ar-Xiv:1207.0580v1, Geoffrey E. Hinton, Nitish Srivastava, Alex Krizhevsky, Ilya Sutskever, Ruslan R. Salakhutdinov (2012) ist ein Verfahren zum Trainieren neuronaler Netze bekannt, bei dem während des Trainings zufällig Merkmalsdetektoren übergangen werden. Diese Verfahren ist auch unter dem Namen "Dropout" bekannt.

Aus "Batch Normalization: Accelerating Deep Network Training by Reducing Internal Covariate Shift", arXiv preprint arXiv:1502.03167v3, Sergey Ioffe, Christian Szegedy (2015) in ein Verfahren zum Trainieren neuronaler Netze bekannt, bei dem Eingangsgrößen in eine Schicht für einen kleinen Stapel (Englisch: "mini-batch") von Trainingsbeispielen normalisiert werden. ELAD HOFFER ET AL: "Norm matters: efficient and accurate normalization schemes in deep networks",ARXIV.ORG, CORNELL UNIVERSITY LIBRARY, 201 OLIN LIBRARY CORNELL UNIVERSITY ITHACA, NY 14853, 5. März 2018, offenbart ein Verfahren zum Klassifizieren von Eingangssignalen, welche abhängig von einem Ausgangssignal eines Sensors ermittelt wurden, mittels eines neuronalen Netzes wobei das neuronale Netz eine Skalierungsschicht umfasst, wobei die Skalierungsschicht ein am Eingang der Skalierungsschicht anliegendes Eingangssignal derart auf ein am Ausgang der Skalierungsschicht anliegendes Ausgangssignal abbildet, dass diese Abbildung einer Projektion des Eingangssignals auf einen vorgebbaren Wertebereich entspricht, wobei die Parameter, die die Abbildung charakterisieren, vorgebbar sind.

Vorteile der Erfindung

Das Verfahren mit den Merkmalen der unabhängigen Ansprüche hat demgegenüber den Vorteil, dass eine Architektursuche des neuronalen Netzes vereinfacht wird.

Vorteilhafte Weiterbildungen sind Gegenstand der abhängigen Ansprüche.

Offenbarung der Erfindung

Mit hinreichend vielen Trainingsdaten können sogenannte "Deep Learning"-Verfahren, also (tiefe) künstliche neuronale Netze, benutzt werden, um effizient eine Abbildung zwischen einem Eingangsraum $V_0$ und einem Ausgangsraum $V_k$ zu ermitteln. Dies kann beispielsweise eine Klassifikation von Sensordaten, insbesondere Bilddaten, sein, also eine Abbildung aus Sensordaten bzw. Bilddaten auf Klassen. Zu Grunde liegt der Ansatz, $k-1$ viele verdeckte Räume $V_1, \ldots, V_{k-1}$ vorzusehen. Ferner werden $k$ viele Abbildungen $f^i: V_{i-1} \to V_i$ ($i = 1 \ldots k$) zwischen diesen Räumen vorgesehen. Jede dieser Abbildungen $f^i$ wird üblicherweise als eine Schicht (Englisch: "layer") bezeichnet. Eine solche Schicht $f^i$ ist typischerweise durch Gewichte $w_i \in W^i$ mit einem geeignet gewählten Raum $W^i$ parametriert. Die Gewichte $w_1, \ldots, w_k$ der $k$ vielen Schichten $f^i$ werden zusammengefasst auch als Gewichte $w \in W := W^1 \times \ldots \times W^k$ bezeichnet, und die Abbildung vom Eingangsraum $V_0$ auf den Ausgangsraum $V_k$ als $f_w: V_0 \to V_k$, welche sich aus den einzelnen Abbildungen $f^i$ (mit explizit als Subskript angedeuteten Gewichten $w_i$) ergibt als $f_w(x) := f^k_{w_k} \circ \ldots \circ f^1_{w_1}(x)$ .

Mit einer gegebenen Wahrscheinlichkeitsverteilung $D$, welche auf $V_0 \times V_k$ definiert ist, besteht die Aufgabe des Trainings des neuronalen Netzes darin, Gewichte $w \in W$ so zu bestimmen, dass ein Erwartungswert $\Phi$ einer Kostenfunktion $L$

$$\Phi[w] = E_{(x_D, y_D) \sim D}[L(f_w(x_D), y_D)] \qquad (1)$$

minimiert wird. Hierbei bezeichnet die Kostenfunktion $L$ ein Maß für den Abstand zwischen der mittels des der Funktion $f_w$ ermittelten Abbildung einer Eingangsgröße $x_D$ auf eine Größe $f_w(x_D)$ im Ausgangsraum $V_k$ und einer tatsächlichen Ausgangsgröße $y_D$ im Ausgangsraum $V_k$.

Unter einem "tiefen neuronalen Netz" kann ein neuronales Netz mit wenigstens zwei verdeckten Schichten (Englisch: "hidden layer") verstanden werden.

Um diesen Erwartungswert $\Phi$ zu minimieren, können gradientenbasierte Verfahren zum Einsatz kommen, die einen Gradienten $\nabla\Phi$ bezüglich der Gewichte w ermitteln. Dieser Gradient $\nabla\Phi$ wird gewöhnlich mittels Trainingsdaten ($x_j$, $y_j$) approximier, also durch $\nabla_w L(f_w(x_j, y_j))$, wobei die Indizes $j$ aus einer so genannten Epoche ausgewählt werden. Eine Epoche ist hierbei eine Permutation der Label {1, ..., $N$} der verfügbaren Trainingsdatenpunkte.

Um den Trainingsdatensatz zu erweitern, kann so genannte Datenaugmentierung (auch Augmentierung genannt) zum Einsatz kommen. Hierbei kann für jeden Index $j$ aus der Epoche an Stelle des Paares ($x_j$, $y_j$) ein augmentiertes Paar ($x_a$, $y_j$) gewählt werden, wobei hier das Eingangssignal $x_j$ durch einen augmentierten Eingangswert $x_a \in \alpha(x_j)$ ersetzt wird. $\alpha(x_j)$ kann hierbei eine Menge typischer Variationen des Eingangssignal $x_j$ sein (inklusive des Eingangssignals $x_j$ selbst), die eine Klassifikation des Eingangssignals $x_j$, also das Ausgangssignal des neuronalen Netzes, unverändert lassen.

Dieses epochenbasierte Sampling ist allerdings nicht vollständig konsistent mit der Definition aus Gleichung (1), da jeder Datenpunkt im Verlauf einer Epoche exakt ein Mal gewählt wird. Die Definition aus Gleichung (1) legt hingegen unabhängig gezogene Datenpunkte zu Grunde. D.h. während Gleichung (1) ein Ziehen der Datenpunkte "mit Zurücklegen" voraussetzt, vollzieht das epochenbasierte Sampling ein Ziehen der Datenpunkte "ohne Zurücklegen". Dies kann dazu führen, dass die Voraussetzungen mathematischer Konvergenzbeweise nicht gegeben sind (denn zieht man $N$ Beispiele aus einer Menge $N$ vieler Datenpunkte, so ist die Wahrscheinlichkeit, jeden dieser Datenpunkte exakt einmal zu ziehen, kleiner als $e^{-\frac{N}{2}}$ (für $N > 2$), während diese Wahrscheinlichkeit beim epochenbasierten Sampling stets gleich 1 ist.

Kommt Datenaugmentierung zum Einsatz, kann dieser statistische Effekt noch verstärkt werden, da in jeder Epoche ein Element der Menge $\alpha(x_j)$ vorhanden ist und, je nach Augmentierungsfunktion $\alpha$, nicht ausgeschlossen werden kann, dass $\alpha(x_j) \approx \alpha(x_i)$ für $i \neq j$. Eine statistisch korrekte Abbildung der Augmentierungen mittels der Menge $\alpha(x_j)$ ist hierbei schwierig, da der Effekt nicht für jedes Eingangsdatum $x_j$ gleichermaßen ausgeprägt sein muss. So kann z.B. eine Rotation auf kreisförmige Gegenstände keine Auswirkung haben, sich aber auf allgemeine Objekte sehr stark auswirken. Daher kann die Größe der Menge $\alpha(x_j)$ vom Eingangsdatum $x_j$ abhängig sein, was für adverserielle Trainingsmethoden problematisch sein kann.

Schließlich ist die Anzahl $N$ der Trainingsdatenpunkte eine i.d.R. aufwändig einzustellende Größe. Ist $N$ zu groß gewählt, kann die Laufzeit des Trainingsverfahrens ungebührlich verlängert werden, ist $N$ zu klein gewählt, kann eine Konvergenz nicht garantiert werden, da mathematische Beweise der Konvergenz i.A. auf Annahmen aufbauen, die dann nicht erfüllt sind. Darüber hinaus ist nicht klar, zu welchem Zeitpunkt das Training zuverlässig beendet werden soll. Nimmt man hierbei einen Teil der Datenpunkte als Evaluationsdatensatz und bestimmt die Güte der Konvergenz mittels dieses Evaluationsdatensatzes, kann dies dazu führen, dass bezüglich der Datenpunkte des Evaluationsdatensatzes eine Überanpassung (Englisch: "over-fitting") der Gewichte w stattfindet, was nicht nur die Dateneffizienz verringert, sondern auch die Leistungsfähigkeit des Netzes verschlechtern kann, wenn es auf andere als die Trainingsdaten angewendet wird. Dies kann zu einer Verringerung der sogenannten "Generalisierbarkeit" (Englisch: "generalizability') führen.

Um eine Überanpassung zu reduzieren, kann mittels des eingangs genannten "Dropout"-Verfahrens eine Information, die in den verdeckten Schichten gespeichert ist, zufällig ausgedünnt werden.

Um die Randomisierung des Trainingsvorgangs zu verbessern, können durch die Verwendung sogenannter Stapelnormierungsschichten (Englisch: "batch normalization layer") statistische Parameter $\mu$ und $\sigma$ über sogenannten Ministapeln (Englisch: "mini batch) eingeführt werden, die während des Trainingsvorgangs probabilistisch aktualisiert werden. Bei der Inferenz werden die Werte dieser Parameter $\mu$ und $\sigma$ als fest vorgebbare Werte gewählt, beispielsweise als Schätzwerte aus dem Training durch Extrapolation des exponentiellen Abfallverhaltens.

Ist die Schicht mit Index $i$ eine Stapelnormierungsschicht, werden die zugehörigen Gewichte $w_i = (\mu_i, \sigma_i)$ bei einem Gradientenabstieg nicht aktualisiert, d.h. diese Gewichte $w_i$ werden somit anders behandelt als die Gewichte $w_k$ der übrigen Schichten $k$. Dies erhöht die Komplexität einer Implementierung.

Darüber hinaus ist die Größe der Ministapel ein Parameter, der das Trainingsergebnis i.A. beeinflusst und daher als weiterer Hyperparameter möglichst gut eingestellt werden muss, beispielsweise im Rahmen einer (ggf. aufwändigen) Architektursuche.

In einem ersten Aspekt der Erfindung ist daher vorgesehen, dass das neuronale Netz eine Skalierungsschicht umfasst, wobei die Skalierungsschicht ein am Eingang der Skalierungsschicht anliegendes Eingangssignal derart auf ein am Ausgang der Skalierungsschicht anliegendes Ausgangssignal abbildet, dass diese Abbildung einer Projektion des Eingangssignals auf einen vorgebbaren Wertebereich entspricht, wobei Parameter, die die Abbildung charakterisieren, vorgebbar sind. Der Wertebereich wird hierbei durch eine Norm definiert. So erreicht die Skalierungsschicht, dass die Skala des Eingangssignals bzgl. dieser Norm beschränkt wird.

"Vorgebbar" bedeutet in diesem Zusammenhang, dass diese Parameter während eines Trainings des neuronalen Netzes abhängig von einem Gradienten angepasst sind, wobei dieser Gradient in üblicher Weise abhängig von einem Ausgangssignal des neuronalen Netzes und einem zugehörigen gewünschten Ausgangssignal ermittelt wird.

D.h., dass zunächst in einer Trainingsphase die vorgebbaren Parameter abhängig von einem Verfahren zum Trainieren des neuronalen Netzes angepasst werden, wobei bei dem Trainieren ein Anpassen dieser vorgebbaren Parameter abhängig von dem Ausgangssignal des neuronalen Netzes bei Zuführung des Eingangssignals des neuronalen Netzes und dem zugehörigen gewünschten Ausgangssignal geschieht, wobei das Anpassen der vorgebbaren Parameter abhängig von einem ermittelten Gradienten geschieht, der abhängig von dem Ausgangssignal des neuronalen Netzes und dem zugehörigen gewünschten Ausgangssignal ist.

Erfindungsgemäß ist vorgesehen, dass die Skalierungsschicht ein am Eingang der Skalierungsschicht anliegendes Eingangssignal derart auf ein am Ausgang der Skalierungsschicht anliegendes Ausgangssignal abbildet, dass diese Abbildung einer Projektion auf einen Ball entspricht, wobei Zentrum $c$ und/oder Radius $\rho$ dieses Balles fest vorgebbar sein können.

Hierbei ist die Abbildung durch die Gleichung $y = argmin_{N_1(y-c)\leq\rho} N_2(x - y)$ mit einer ersten Norm ($N_1$) und einer zweiten Norm ($N_2$) gegeben. Der Begriff "Norm" ist hierbei im mathematischen Sinne zu verstehen.

In einer besonders effizient zu berechnenden Weiterbildung kann vorgesehen sein, dass die erste Norm ($N_1$) und die zweite Norm ($N_2$) gleich gewählt sind.

Alternativ oder zusätzlich kann die erste Norm ($N_1$) eine $L^\infty$-Norm sein. Diese Norm lässt sich ebenfalls besonders effizient berechnen, insbesondere auch dann, wenn die erste Norm ($N_1$) und die zweite Norm ($N_2$) nicht gleich gewählt sind.

Alternativ kann vorgesehen sein, dass wobei die erste Norm ($N_1$) eine $L^1$-Norm ist. Diese Wahl der ersten Norm begünstigt die Spärlichkeit (eng. "sparsity") des Ausgangssignals der Skalierungsschicht. Dies ist beispielsweise für die Kompression von neuronalen Netzen vorteilhaft ist, da Gewichte mit dem Wert 0 keinen Beitrag zum Ausgabewert ihrer Schicht haben.

Daher kann ein neuronales Netz mit einer derartigen Schicht insbesondere in Verbindung mit einem Kompressionsverfahren besonders speichereffizient eingesetzt werden.

Bei den beschriebenen Varianten für die erste Norm ($N_1$) kann vorteilhafterweise vorgesehen sein, dass die zweite Norm ($N_2$) eine $L^2$-Norm ist. Damit lassen sich die Verfahren besonders einfach realisieren.

Besonders vorteilhaft ist es hierbei, wenn die Lösung der Gleichung $y = argmin_{N_1(y-c)\leq\rho} N_2(x - y)$ mittels eines deterministischen Newton-Verfahrens erfolgt.

Überraschenderweise wurde nämlich erkannt, dass dieses Verfahren besonders effizient ist, wenn das am Eingang der Skalierungsschicht ein Eingangssignal mit vielen wichtigen, d.h. stark gewichteten, Merkmalen anliegt.

Nachfolgend werden Ausführungsformen der Erfindung unter Bezugnahme auf die beiliegenden Zeichnungen näher erläutert. In den Zeichnungen zeigen:

Figur 1    schematisch einen Aufbau einer Ausführungsform eines Steuerungssystems;

Figur 2    schematisch ein Ausführungsbeispiel zur Steuerung eines wenigstens teilautonomen Roboters;

Figur 3    schematisch ein Ausführungsbeispiel zur Steuerung eines Fertigungssystems;

Figur 4    schematisch ein Ausführungsbeispiel zur Steuerung eines persönlichen Assistenten;

Figur 5    schematisch ein Ausführungsbeispiel zur Steuerung eines Zugangssystems;

Figur 6    schematisch ein Ausführungsbeispiel zur Steuerung eines Überwachungssystems;

Figur 7    schematisch ein Ausführungsbeispiel zur Steuerung eines medizinisch bildgebenden Systems;

Figur 8    schematisch ein Trainingssystem;

Figur 9    schematisch einen Aufbau eines neuronalen Netzes;

Figur 10    schematisch eine Informationsweiterleitung innerhalb des neuronalen Netzes;

Figur 11    in einem Flussdiagramm eine Ausführungsform eines Trainingsverfahrens;

Figur 12    in einem Flussdiagramm eine Ausführungsform eines Verfahrens zum Schätzen eines Gradienten;

Figur 13    in einem Flussdiagramm eine alternative Ausführungsform des Verfahrens zum Schätzen des Gradienten;

Figur 14    in einem Flussdiagramm eine Ausführungsform eines Verfahrens zum Skalieren des geschätzten Gradienten;

Figur 15    in Flussdiagrammen Ausführungsformen zur Implementierung einer Skalierungsschicht innerhalb des neuronalen Netzes.

Figur 16   in einem Flussdiagramm ein Verfahren zum Betreiben des trainierten neuronalen Netzes.

Beschreibung der Ausführungsbeispiele

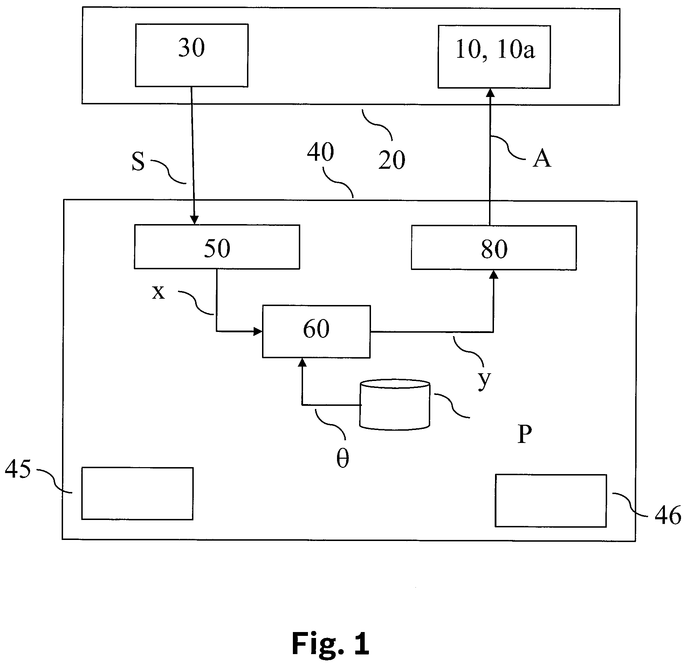

Figur 1 zeigt einen Aktor 10 in seiner Umgebung 20 in Interaktion mit einem Steuerungssystem 40. Aktor 10 und Umgebung 20 werden gemeinschaftlich auch als Aktorsystem bezeichnet. In vorzugsweise regelmäßigen zeitlichen Abständen wird ein Zustand des Aktorsystems mit einem Sensor 30 erfasst, der auch durch eine Mehrzahl von Sensoren gegeben sein kann. Das Sensorsignal S - bzw. im Fall mehrerer Sensoren je ein Sensorsignal S - des Sensors 30 wird an das Steuerungssystem 40 übermittelt. Das Steuerungssystem 40 empfängt somit eine Folge von Sensorsignalen S. Das Steuerungssystem 40 ermittelt hieraus Ansteuersignale A, welche an den Aktor 10 übertragen werden.

Der Sensor 30 ist ein beliebiger Sensor, der einen Zustand der Umgebung 20 erfasst und als Sensorsignal S übermittelt. Es kann beispielsweise ein bildgebender Sensor sein, insbesondere ein optischer Sensor wie ein Bildsensor oder ein Videosensor, oder ein Radarsensor, oder ein Ultraschallsensor, oder ein LiDAR-Sensor. Es kann auch ein akustischer Sensor sein, der beispielsweise Körperschall oder Sprachsignale empfängt. Ebenso kann es sich bei dem Sensor um einen Positionssensor (wie beispielsweise GPS) handeln oder um einen kinematischen Sensor (beispielsweise einen ein- oder mehrachsigen Beschleunigungssensor) handeln. Auch ein Sensor, der eine Ausrichtung des Aktors 10 in der Umgebung 20 charakterisiert (beispielsweise ein Kompass) ist möglich. Auch ein Sensor, der eine chemische Zusammensetzung der Umgebung 20 erfasst, beispielsweise ein Lambda-Sensor, ist möglich. Alternativ oder zusätzlich kann der Sensor 30 auch ein Informationssystem umfassen, das eine Information über einen Zustand des Aktorsystems ermittelt, wie beispielsweise ein Wetterinformationssystem, das einen aktuellen oder zukünftigen Zustand des Wetters in der Umgebung 20 ermittelt.

Das Steuerungssystem 40 empfängt die Folge von Sensorsignalen S des Sensors 30 in einer optionalen Empfangseinheit 50, die die Folge von Sensorsignalen S in eine Folge von Eingangssignalen x umwandelt (alternativ kann auch unmittelbar je das Sensorsignal S als Eingangssignal x übernommen werden). Das Eingangssignal x kann beispielsweise ein Ausschnitt oder eine Weiterverarbeitung des Sensorsignals S sein. Das Eingangssignal x kann beispielsweise Bilddaten oder Bilder umfassen, oder einzelne Frames einer Videoaufzeichnung. Mit anderen Worten wird Eingangssignal x abhängig von Sensorsignal S ermittelt. Das Eingangssignal x wird einem neuronalen Netz 60 zugeführt.

Das neuronale Netz 60 wird vorzugsweise parametriert durch Parameter $\theta$, beispielsweise umfassend Gewichte w, die in einem Parameterspeicher P hinterlegt sind und von diesem bereitgestellt werden.

Das neuronale Netz 60 ermittelt aus den Eingangssignalen x Ausgangssignale y. Typischerweise kodieren die Ausgangssignalen y eine Klassifikationsinformation des Eingangssignals x. Die Ausgangssignale y werden einer optionalen Umformeinheit 80 zugeführt, die hieraus Ansteuersignale A ermittelt, welche dem Aktor 10 zugeführt werden, um den Aktor 10 entsprechend anzusteuern.

Der Aktor 10 empfängt die Ansteuersignale A, wird entsprechend angesteuert und führt eine entsprechende Aktion aus. Der Aktor 10 kann hierbei eine (nicht notwendigerweise baulich integrierte) Ansteuerlogik umfassen, welches aus dem Ansteuersignal A ein zweites Ansteuersignal ermittelt, mit dem dann der Aktor 10 angesteuert wird.

In weiteren Ausführungsformen umfasst das Steuerungssystem 40 den Sensor 30. In noch weiteren Ausführungsformen umfasst das Steuerungssystem 40 alternativ oder zusätzlich auch den Aktor 10.

In weiteren bevorzugten Ausführungsformen umfasst das Steuerungssystem 40 eine Ein- oder Mehrzahl von Prozessoren 45 und wenigstens ein maschinenlesbares Speichermedium 46, auf dem Anweisungen gespeichert sind, die dann, wenn sie auf den Prozessoren 45 ausgeführt werden, das Steuerungssystem 40 veranlassen, das Verfahren zum Betreiben des Steuerungssystems 40 auszuführen.

In alternativen Ausführungsformen ist alternativ oder zusätzlich zum Aktor 10 eine Anzeigeeinheit 10a vorgesehen.

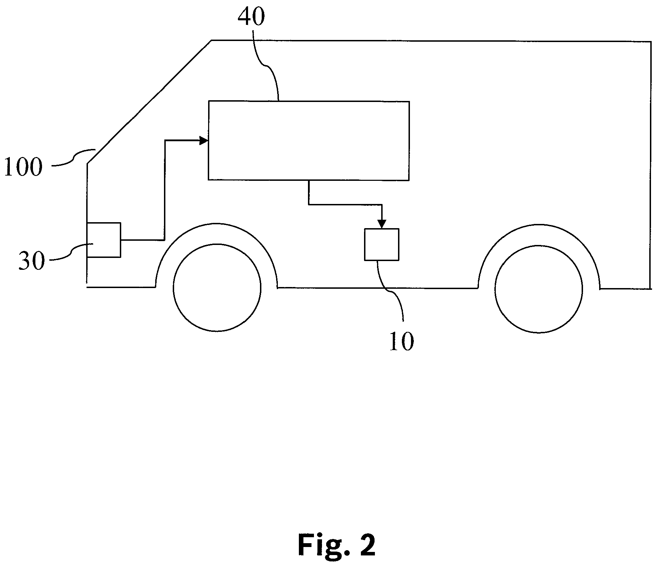

Figur 2 zeigt ein Ausführungsbeispiel, in dem das Steuerungssystem 40 zur Steuerung eines wenigstens teilautonomen Roboters, hier eines wenigstens teilweise automatisierten Kraftfahrzeugs 100, eingesetzt wird.

Bei dem Sensor 30 kann es sich um einen der im Zusammenhang mit Figur 1 genannten Sensoren handeln, vorzugsweise um einen oder mehrere vorzugsweise im Kraftfahrzeug 100 angeordnete Videosensoren und/oder einen oder mehrere Radarsensoren und/oder einen oder mehrere Ultraschallsensoren und/oder einen oder mehrere LiDAR- Sensoren und/oder einen oder mehrere Positionssensoren (beispielsweise GPS) handeln.

Das neuronale Netz 60 kann aus den Eingangsdaten x beispielsweise Gegenstände in der Umgebung des wenigstens teilautonomen Roboters detektieren. Bei dem Ausgangssignal y kann es sich um eine Information handeln, die charakterisiert, wo in der Umgebung des wenigstens teilautonomen Roboters Gegenstände vorhanden sind. Das Ausgangssignal A kann dann abhängig von dieser Information und/oder entsprechend dieser Information ermittelt werden.

Bei dem vorzugsweise im Kraftfahrzeug 100 angeordneten Aktor 10 kann es sich beispielsweise um eine Bremse, einen Antrieb oder eine Lenkung des Kraftfahrzeugs 100 handeln. Das Ansteuersignal A kann dann derart ermittelt werden, dass der Aktor oder die Aktoren 10 derart angesteuert wird, dass das Kraftfahrzeug 100 beispielsweise eine Kollision mit den vom neuronalen Netz 60 identifizierten Gegenständen verhindert, insbesondere, wenn es sich um Gegenstände bestimmter Klassen, z.B. um Fußgänger, handelt. Mit anderen Worten kann Ansteuersignal A abhängig von der ermittelten Klasse und/oder entsprechend der ermittelten Klasse ermittelt werden.

Alternativ kann es sich bei dem wenigstens teilautonomen Roboter auch um einen anderen mobilen Roboter (nicht abgebildet) handeln, beispielsweise um einen solchen, der sich durch Fliegen, Schwimmen, Tauchen oder Schreiten fortbewegt. Bei dem mobilen Roboter kann es sich beispielsweise auch um einen wenigstens teilautonomen Rasenmäher oder einen wenigstens teilautonomen Putzroboter handeln. Auch in diesen Fällen kann das Ansteuersignal A derart ermittelt werden, dass Antrieb und/oder Lenkung des mobilen Roboters derart angesteuert werden, dass der wenigstens teilautonome Roboter beispielsweise eine Kollision mit den vom neuronalen Netz 60 identifizierten Gegenständen verhindert,

In einer weiteren Alternative kann es sich bei dem wenigstens teilautonomen Roboter auch um einen Gartenroboter (nicht abgebildet) handeln, der mit einem bildgebenden Sensor 30 und dem neuronalen Netz 60 eine Art oder einen Zustand von Pflanzen in der Umgebung 20 ermittelt. Bei dem Aktor 10 kann es sich dann beispielsweise um einen Applikator von Chemikalien handeln. Das Ansteuersignal A kann abhängig von der ermittelten Art oder vom ermittelten Zustand der Pflanzen derart ermittelt werden, dass eine der ermittelten Art oder dem ermittelten Zustand entsprechende Menge der Chemikalien aufgebracht wird.

In noch weiteren Alternativen kann es sich bei dem wenigstens teilautonomen Roboter auch um ein Haushaltsgerät (nicht abgebildet), insbesondere eine Waschmaschine, einen Herd, einen Backofen, eine Mikrowelle oder eine Spülmaschine handeln. Mit dem Sensor 30, beispielsweise einem optischen Sensor, kann ein Zustand eines mit dem Haushaltsgerät behandelten Objekts erfasst werden, beispielsweise im Falle der Waschmaschine ein Zustand von Wäsche, die in der Waschmaschine befindlich ist. Mit dem neuronalen Netz 60 kann dann eine Art oder ein Zustand dieses Objekts ermittelt und vom Ausgangssignal y charakterisiert werden. Das Ansteuersignal A kann dann derart ermittelt werden, dass das Haushaltsgerät abhängig von der ermittelten Art oder dem ermittelten Zustand des Objekts angesteuert wird. Beispielsweise kann im Falle der Waschmaschine diese abhängig davon angesteuert werden, aus welchem Material die darin befindliche Wäsche ist. Ansteuersignal A kann dann abhängig davon gewählt werden, welches Material der Wäsche ermittelt wurde.

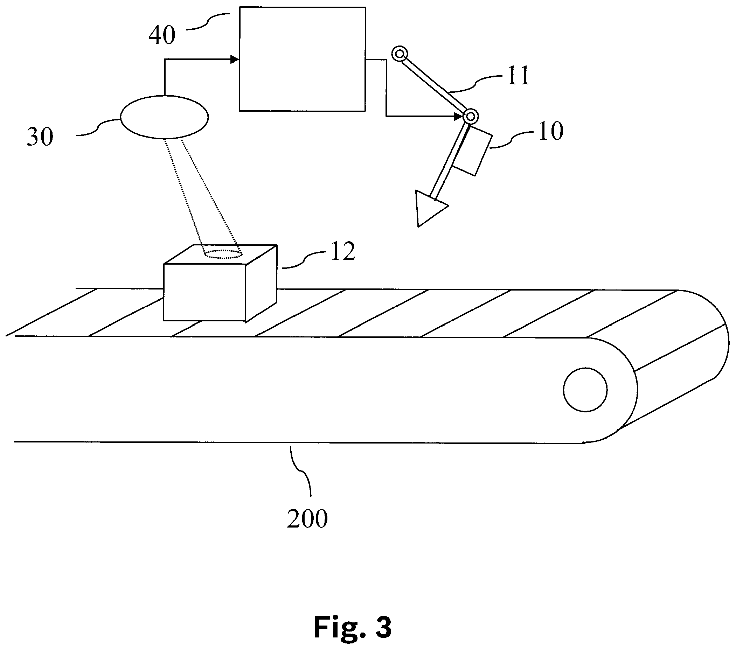

Figur 3 zeigt ein Ausführungsbeispiel, in dem das Steuerungssystem 40 zur Ansteuerung einer Fertigungsmaschine 11 eines Fertigungssystems 200 verwendet wird, indem ein diese Fertigungsmaschine 11 steuernder Aktor 10 angesteuert wird. Bei der Fertigungsmaschine 11 kann es sich beispielsweise um eine Maschine zum Stanzen, Sägen, Bohren und/oder Schneiden handeln.

Bei dem Sensor 30 kann es sich um einen der im Zusammenhang mit Figur 1 genannten Sensoren handeln, vorzugsweise um einen optischen Sensor, der z.B. Eigenschaften von Fertigungserzeugnissen 12 erfasst. Es ist möglich, dass der die Fertigungsmaschine 11 steuernde Aktor 10 abhängig von den ermittelten Eigenschaften des Fertigungserzeugnisses 12 angesteuert wird, damit die Fertigungsmaschine 11 entsprechend einen nachfolgenden Bearbeitungsschritt dieses Fertigungserzeugnisses 12 ausführt. Es ist auch möglich, dass der Sensor 30 die Eigenschaften des von der Fertigungsmaschine 11 bearbeiteten Fertigungserzeugnisses 12 ermittelt, und abhängig davon eine Ansteuerung der Fertigungsmaschine 11 für ein nachfolgendes Fertigungserzeugnis anpasst.

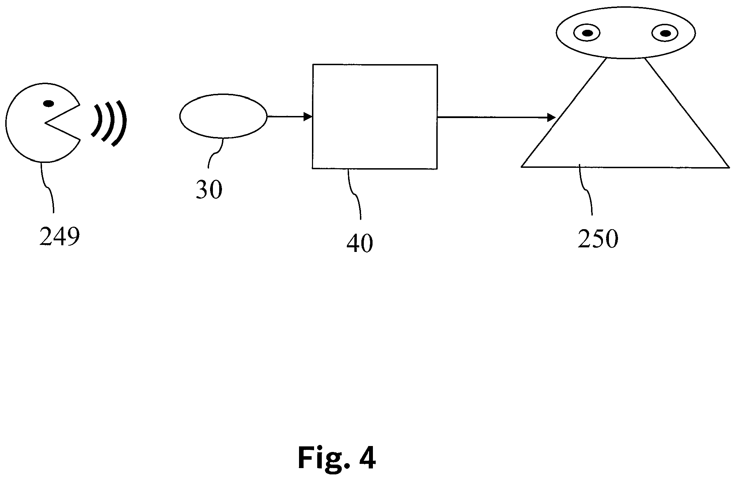

Figur 4 zeigt ein Beispiel, bei dem das Steuerungssystem 40 zur Steuerung eines persönlichen Assistenten 250 eingesetzt wird. Bei dem Sensor 30 kann es sich um einen der im Zusammenhang mit Figur 1 genannten Sensoren handeln. Der Sensor 30 ist bevorzugt ein akustischer Sensor, der Sprachsignale eines Nutzers 249 empfängt. Alternativ oder zusätzlich kann der Sensor 30 auch eingerichtet sein, optische Signale zu empfangen, beispielsweise Videobilder einer Geste des Nutzers 249.

Abhängig von den Signalen des Sensors 30 ermittelt das Steuerungssystem 40 ein Ansteuersignal A des persönlichen Assistenten 250, beispielsweise, indem das neuronale Netz eine Gestenerkennung durchführt. Dem persönlichen Assistenten 250 wird dann dieses ermittelte Ansteuersignal A übermittelt und er somit entsprechend angesteuert. Dieses ermittelte Ansteuersignal A ist kann insbesondere derart gewählt werden, dass es einer vermuteten gewünschten Ansteuerung durch den Nutzer 249 entspricht. Diese vermutete gewünschte Ansteuerung kann abhängig von der vom neuronalen Netz 60 erkannten Geste ermittelt werden. Das Steuerungssystem 40 kann dann abhängig von der vermuteten gewünschten Ansteuerung das Ansteuersignal A zur Übermittlung an den persönlichen Assistenten 250 wählen und/oder das Ansteuersignal A zur Übermittlung an den persönlichen Assistenten entsprechend der vermuteten gewünschten Ansteuerung 250 wählen.

Diese entsprechende Ansteuerung kann beispielsweise beinhalten, dass der persönliche Assistent 250 Informationen aus einer Datenbank abruft und sie für den Nutzer 249 rezipierbar wiedergibt.

Anstelle des persönlichen Assistenten 250 kann auch ein Haushaltsgerät (nicht abgebildet), insbesondere eine Waschmaschine, ein Herd, ein Backofen, eine Mikrowelle oder eine Spülmaschine vorgesehen sein, um entsprechend angesteuert zu werden.

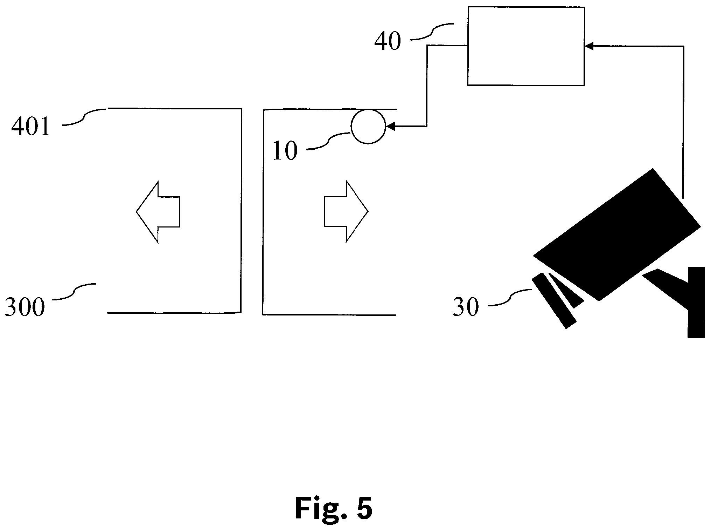

Figur 5 zeigt ein Ausführungsbeispiel, bei dem das Steuerungssystem 40 zur Steuerung eines Zugangssystems 300 eingesetzt wird. Das Zugangssystem 300 kann eine physische Zugangskontrolle, beispielsweise eine Tür 401 umfassen.

Bei dem Sensor 30 kann es sich um einen der im Zusammenhang mit Figur 1 genannten Sensoren handeln, vorzugsweise um einen optischen Sensor (beispielsweise zur Erfassung von Bild- oder Videodaten), der eingerichtet ist, ein Gesicht zu erfassen. Mittels des neuronalen Netzes 60 kann dieses erfasste Bild interpretiert werden. Beispielsweise kann die Identität einer Person ermittelt werden. Der Aktor 10 kann ein Schloss sein, dass abhängig vom Ansteuersignal A die Zugangskontrolle freigibt, oder nicht, beispielsweise die Tür 401 öffnet, oder nicht. Hierzu kann das Ansteuersignal A abhängig von der der Interpretation des neuronalen Netzes 60 gewählt werden, beispielsweise abhängig von der ermittelten Identität der Person. An Stelle der physischen Zugangskontrolle kann auch eine logische Zugangskontrolle vorgesehen sein.

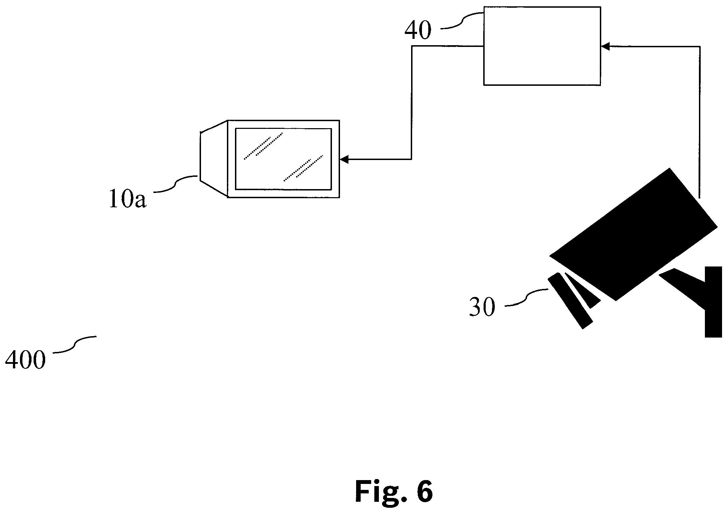

Figur 6 zeigt ein Ausführungsbeispiel, bei dem das Steuerungssystem 40 zur Steuerung eines Überwachungssystems 400 verwendet wird. Von dem in Figur 5 dargestellten Ausführungsbeispiel unterscheidet sich dieses Ausführungsbeispiel dadurch, dass an Stelle des Aktors 10 die Anzeigeeinheit 10a vorgesehen ist, die vom Steuerungssystem 40 angesteuert wird. Beispielsweise kann vom neuronalen Netz 60 ermittelt werden, ob ein vom optischen Sensor aufgenommener Gegenstand verdächtig ist, und das Ansteuersignal A dann derart gewählt werden, dass dieser Gegenstand von der Anzeigeeinheit 10a farblich hervorgehoben dargestellt wird.

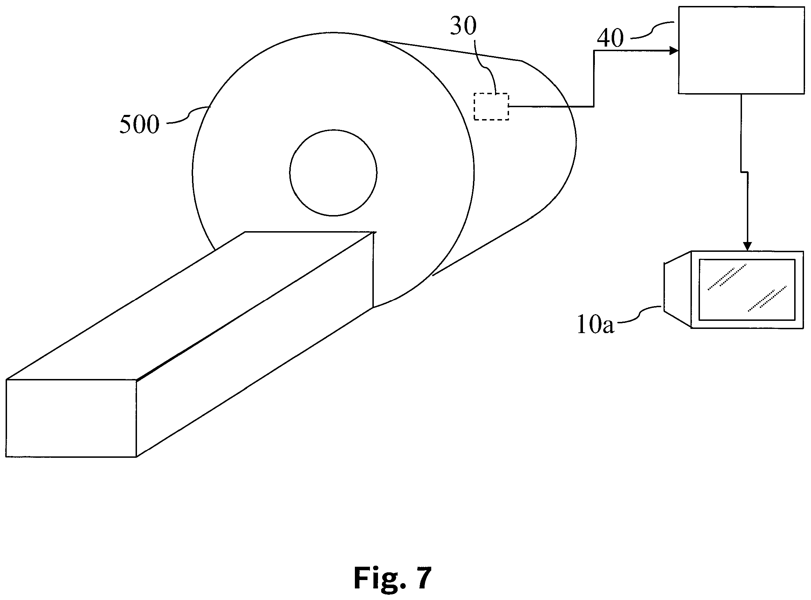

Figur 7 zeigt ein Beispiel, bei dem das Steuerungssystem 40 zur Steuerung eines medizinischen bildgebenden System 500, beispielsweise eines MRT-, Röntgen- oder Ultraschallgeräts, verwendet wird. Der Sensor 30 kann beispielsweise durch einen bildgebenden Sensor gegeben sein, durch das Steuerungssystem 40 wird die Anzeigeeinheit 10a angesteuert. Beispielsweise kann vom neuronalen Netz 60 ermittelt werden, ob ein vom bildgebenden Sensor aufgenommener Bereich auffällig ist, und das Ansteuersignal A dann derart gewählt werden, dass dieser Bereich von der Anzeigeeinheit 10a farblich hervorgehoben dargestellt wird.

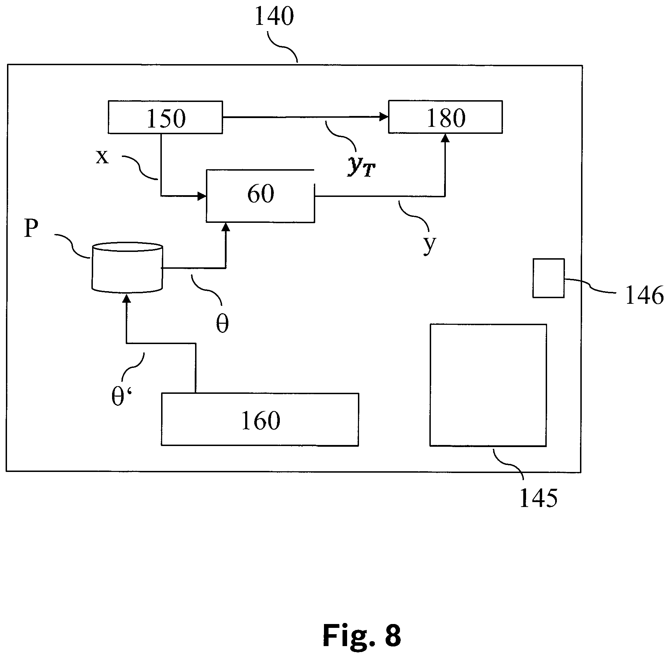

Figur 8 zeigt schematisch ein Ausführungsbeispiel eines Trainingssystems 140 zum Trainieren des neuronalen Netzes 60 mittels eines Trainingsverfahrens.

Eine Trainingsdateneinheit 150 ermittelt geeignete Eingangssignale x, die dem neuronalen Netz 60 zugeführt werden. Beispielsweise greift die Trainingsdateneinheit 150 auf eine computerimplementierte Datenbank zu, in dem ein Satz von Trainingsdaten gespeichert ist, und wählt z.B. zufällig aus dem Satz von Trainingsdaten Eingangssignale x aus. Optional ermittelt die Trainingsdateneinheit 150 auch zu den Eingangssignalen x zugeordnete gewünschte, oder "tatsächliche", Ausgangssignale $y_T$, die einer Bewertungseinheit 180 zugeführt werden.

Das künstliche neuronale Netz x ist eingerichtet, aus den ihm zugeführten Eingangssignalen x zugehörige Ausgangssignale y zu ermitteln. Diese Ausgangssignale y werden der Bewertungseinheit 180 zugeführt.

Die Bewertungseinheit 180 kann beispielsweise mittels einer von den Ausgangssignalen y und den gewünschten Ausgangssignalen $y_T$ abhängigen Kostenfunktion (Englisch: "loss function") $\mathcal{L}$ eine Leistungsfähigkeit des neuronalen Netzes 60 charakterisiert werden. Die Parameter θ können abhängig von der Kostenfunktion $\mathcal{L}$ optimiert werden.

In weiteren bevorzugten Ausführungsformen umfasst das Trainingssystem 140 eine Ein- oder Mehrzahl von Prozessoren 145 und wenigstens ein maschinenlesbares Speichermedium 146, auf dem Anweisungen gespeichert sind, die dann, wenn sie auf den Prozessoren 145 ausgeführt werden, das Steuerungssystem 140 veranlassen, das Trainingsverfahren auszuführen.

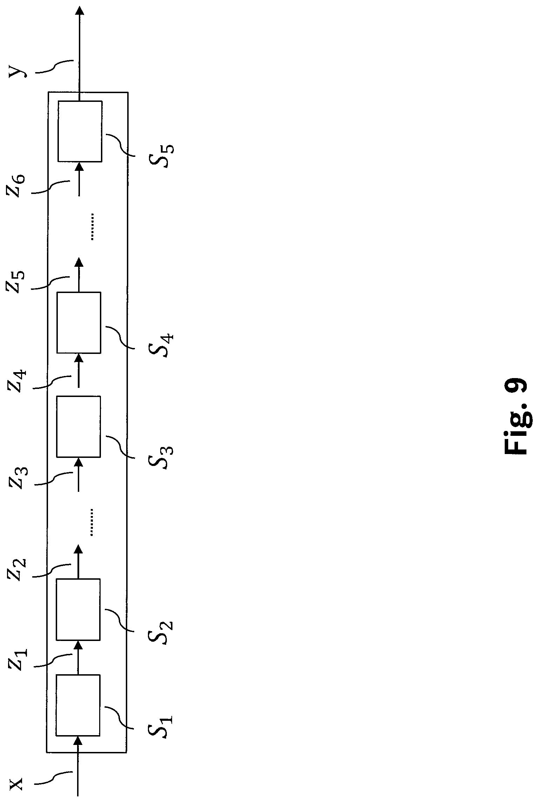

Figur 9 zeigt beispielhaft einen möglichen Aufbau des neuronalen Netzes 60, das im Ausführungsbeispiel als neuronales Netz gegeben ist. Das neuronale Netz umfasst eine Mehrzahl von Schichten $S_1, S_2, S_3, S_4, S_5$, um aus dem Einganssignal x, das an einem Eingang einer Eingangsschicht $S_1$ zugeführt wird, das Ausgangssignal y zu ermitteln, das an einem Ausgang einer Ausgangsschicht $S_5$ anliegt. Jeder der Schichten $S_1, S_2, S_3, S_4, S_5$ ist hierbei eingerichtet, aus einem (ggf. mehrdimensionalen) Eingangssignal x, $z_1, z_3, z_4, z_6$, das an einem Eingang der jeweiligen Schicht $S_1, S_2, S_3, S_4, S_5$ anliegt, ein -- ein (ggf. mehrdimensionales) Ausgangssignal $z_1, z_2, z_4, z_5, y$ zu ermitteln, dass an einem Ausgang der jeweiligen Schicht $S_1, S_2, S_3, S_4, S_5$ anliegt. Solche Ausgangssignale werden, speziell in der Bildverarbeitung, auch als Merkmalskarten (Englisch: "feature maps") bezeichnet. Es ist hierbei nicht notwendig, dass die Schichten $S_1, S_2, S_3, S_4, S_5$ derart angeordnet sind, dass alle Ausgangssignale, die als Eingangssignale in weitere Schichten eingehen, aus jeweils von einer vorhergehenden Schicht in eine unmittelbar nachfolgende Schicht eingehen. Stattdessen sind auch Überbrückungsverbindungen (Englisch: "Skip Connections") oder rekurrente Verbindungen möglich. Ebenso ist selbstverständlich möglich, dass das Eingangssignal x in mehrere der Schichten eingeht, oder dass sich das Ausgangssignal y des neuronalen Netzes 60 aus Ausgangssignalen einer Mehrzahl von Schichten zusammensetzt.

Die Ausgangsschicht $S_5$ kann beispielsweise durch eine Argmax-Schicht gegeben sein (also eine Schicht, die aus einer Mehrzahl von Eingängen mit jeweils zugeordneten Eingangswerten eine Bezeichnung desjenigen Eingangs auswählt, dessen zugeordneter Eingangswert unter diesen Eingangswerten der größte ist), eine oder mehrere der Schichten $S_1, S_2, S_3$ können beispielsweise durch Faltungsschichten gegeben sein.

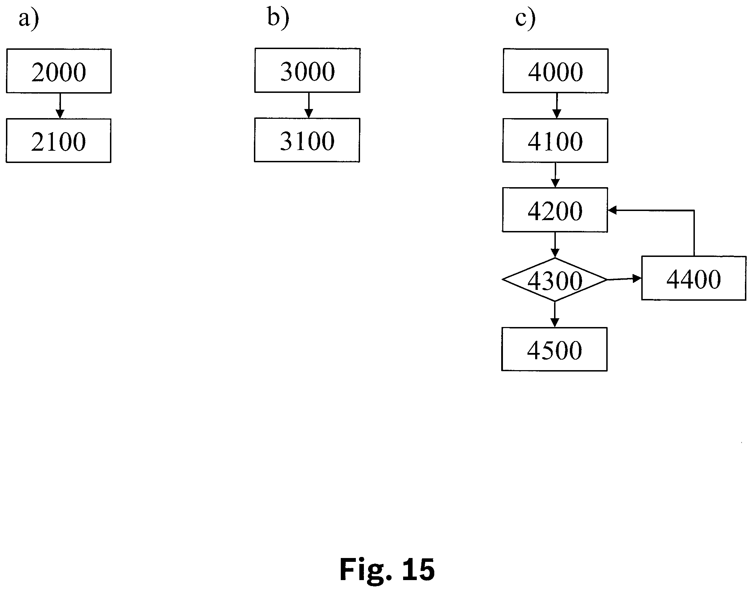

Erfindungsgemäß ist eine Schicht $S_4$ als eine Skalierungsschicht ausgebildet, die ausgebildet ist, dass ein am Eingang der Skalierungsschicht ($S_4$) anliegendes Eingangssignal (x) derart auf ein am Ausgang der Skalierungsschicht ($S_4$) anliegendes Ausgangssignal (y) abgebildet wird, dass das am Ausgang anliegende Ausgangssignal (y) eine Umskalierung des Eingangssignals (x) ist, wobei Parameter, die die Umskalierung charakterisieren, fest vorgebbar sind. Ausführungsbeispiele für Verfahren, die Skalierungsschicht $S_4$ durchführen kann, sind unten im Zusammenhang mit Figur 15 beschrieben.

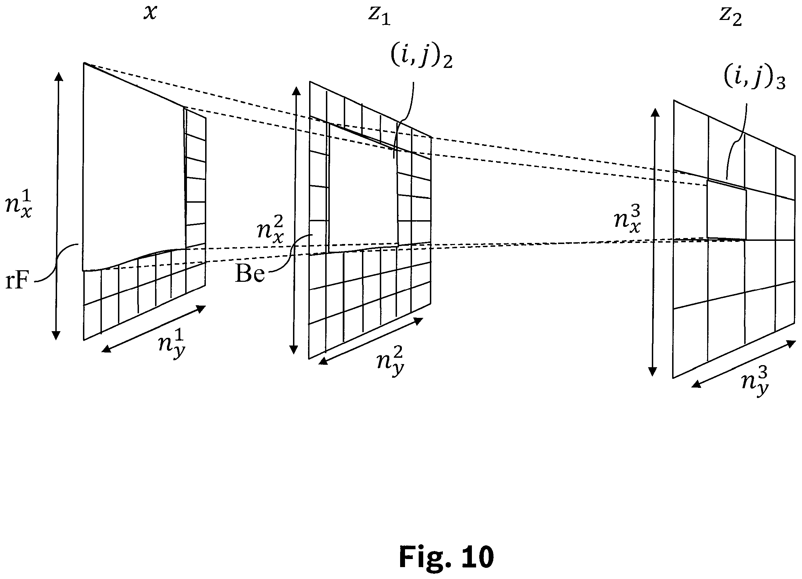

Figur 10 illustriert schematisch die Informationsweiterleitung innerhalb des neuronalen Netzes 60. Schematisch dargestellt sind hier drei mehrdimensionale Signale innerhalb des neuronalen Netzes 60, nämlich das Eingangssignal x, sowie spätere Merkmalskarten $z_1$, $z_2$. Das Eingangssignal x hat im Ausführungsbeispiel eine räumliche Auflösung von $n_x^1 \times n_y^1$ Pixeln, die erste Merkmalskarte $z_1$ von $n_x^2 \times n_y^2$ Pixeln, die zweite Merkmalskarte $z_2$ von $n_x^3 \times n_y^3$ Pixeln. Im Ausführungsbeispiel ist die Auflösung der zweiten Merkmalskarte $z_2$ geringer als die Auflösung des Eingangssignals x, dies ist aber nicht zwingend der Fall.

Dargestellt ist ferner ein Merkmal, z.B. ein Pixel, $(i,j)_3$ der zweiten Merkmalskarte $z_2$. Wird die Funktion, die die zweite Merkmalskarte $z_2$ aus der ersten Merkmalskarte $z_1$ ermittelt, beispielsweise durch eine Faltungsschicht oder eine vollvermaschte Schicht (Englisch: "fully connected layer") dargestellt, so ist es auch möglich, dass eine Mehrzahl von Merkmalen der ersten Merkmalskarte $z_1$ in die Ermittlung des Werts dieses Merkmals $(i,j)_3$ eingeht. Es ist aber natürlich auch möglich, dass nur ein einziges Merkmal der ersten Merkmalskarte $z_1$ in die Ermittlung des Werts dieses Merkmas $(i,j)_3$ eingeht.

Unter "eingehen" kann hierbei vorteilhafterweise verstanden werden, dass es eine Kombination von Werten der Parameter, die die Funktion charakterisieren, mit der die zweite Merkmalskarte $z_2$ aus der ersten Merkmalskarte $z_1$ ermittelt, wird, und von Werten der ersten Merkmalskarte $z_1$ derart gibt, dass der Wert des Merkmals $(i,j)_3$ von dem Wert des eingehenden Merkmals abhängt. Die Gesamtheit dieser eingehenden Merkmale wird in Figur 10 als Bereich Be bezeichnet.

In die Ermittlung jedes Merkmal $(i,j)_2$ des Bereichs Be gehen seinerseits eine Ein- oder Mehrzahl von Merkmalen des Eingangssignals x ein. Die Menge aller Merkmale des Eingangssignals x, die in die Ermittlung wenigstens eines der Merkmale $(i,j)_2$ des Bereichs Be eingehen, werden als rezeptives Feld rF bezeichnet des Merkmals $(i,j)_3$. Mit anderen Worten umfasst das rezeptive Feld rF des Merkmals $(i,j)_3$ all jene Merkmale des Eingangssignals x, die unmittelbar oder mittelbar (mit anderen Worten: wenigstens mittelbar) in die Ermittlung des Merkmals $(i,j)_3$ eingehen, d.h. deren Werte den Wert des Merkmals $(i,j)_3$ beeinflussen können.

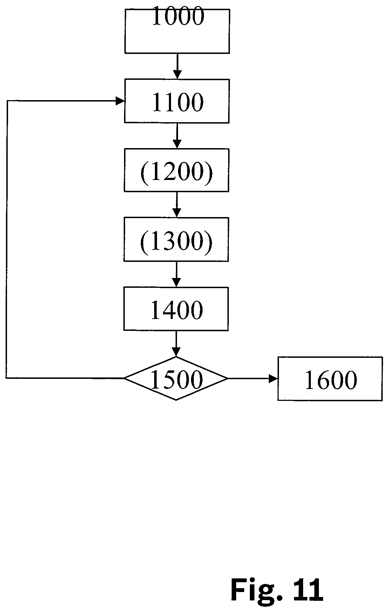

Figur 11 zeigt in einem Flussdiagramm den Ablauf eines Verfahrens zum Trainieren des neuronalen Netzes 60 gemäß einer Ausführungsform.

Zunächst (1000) wird ein Trainingsdatensatz X umfassend Paare ($x_i$, $y_i$) aus Eingangssignalen $x_i$ und jeweils zugehörigen Ausgangssignalen $y_i$ bereitgestellt. Eine Lernrate $\eta$ wird initialisiert, beispielsweise zu $\eta = 1$.

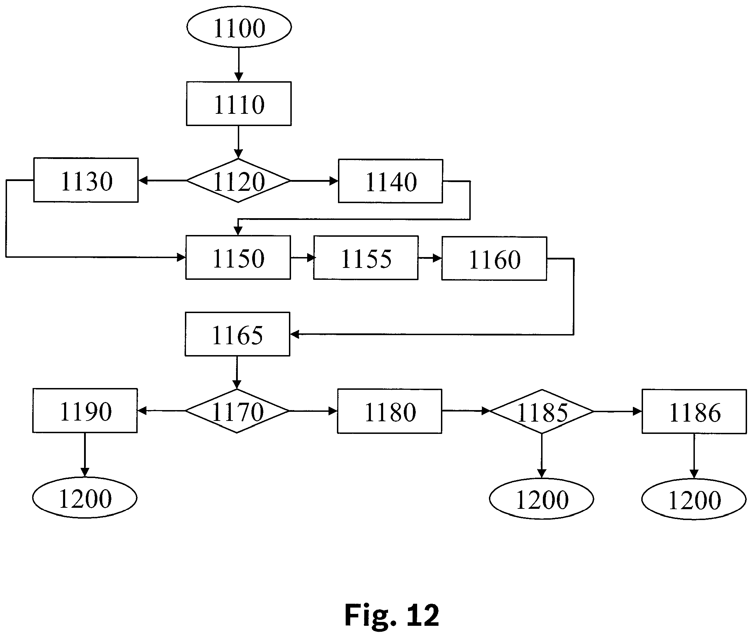

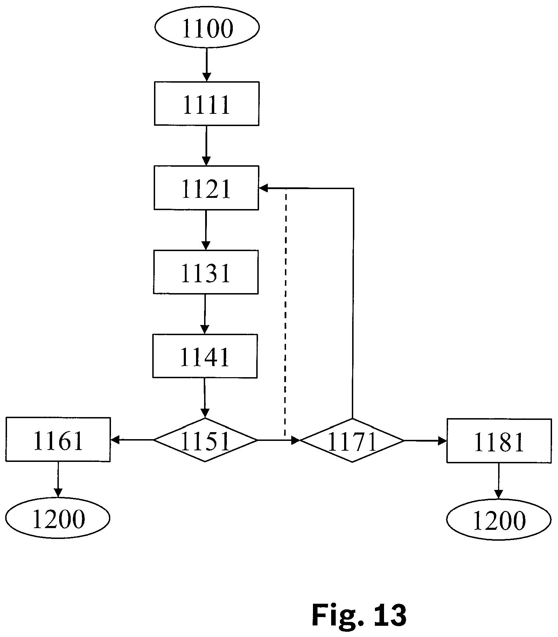

Ferner werden optional eine erste Menge G und eine zweite Menge N initialisiert, beispielsweise, wenn in Schritt 1100 das in Figur 12 illustrierte Ausführungsbeispiel dieses Teils des Verfahrens eingesetzt wird. Soll in Schritt 1100 das in Figur 13 illustrierte Ausführungsbeispiel dieses Teils des Verfahren eingesetzt werden, kann auf die Initialisierung der ersten Menge G und der zweiten Menge N verzichtet werden.

Die Initialisierung der ersten Menge G und der zweiten Menge N kann wie folgt erfolgen: Die erste Menge G, die diejenigen Paare ($x_i$, $y_i$) des Trainingsdatensatzes X umfasst, die im Laufe einer aktuellen Epoche des Trainingsverfahrens bereits gezogen wurden, wird als leere Menge initialisiert. Die zweite Menge N, die diejenigen Paare ($x_i$, $y_i$) des Trainingsdatensatzes X umfasst, die im Laufe der aktuellen Epoche noch nicht gezogen wurden, wird initialisiert, indem ihr alle Paare ($x_i$, $y_i$) des Trainingsdatensatze X zugewiesen werden.

Nun (1100) wird mittels Paaren ($x_i$, $y_i$) aus Eingangssignalen $x_i$ und jeweils zugehörigen Ausgangssignalen $y_i$ des Trainingsdatensatz X ein Gradient g der Kenngröße $\mathcal{L}$ bezüglich der Parameter $\theta$ geschätzt, also $g = \nabla_\theta \mathcal{L}$. Ausfüh-rungsbeispiele dieses Verfahrens sind in Zusammenhang mit Figur 12 bzw. 13 beschrieben.

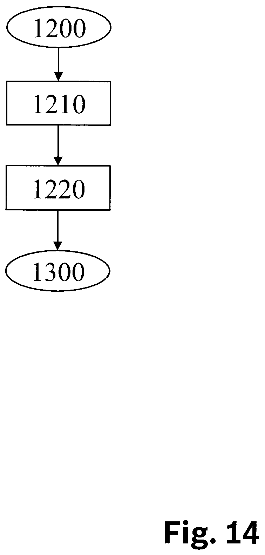

Dann (1200) wird optional eine Skalierung des Gradienten g durchgeführt. Ausführungsbeispiele dieses Verfahren sind in Zusammenhang mit Figur 14 beschrieben.

Anschließend (1300) wird optional eine Anpassung einer Lernrate $\eta$ durchgeführt. Hierbei kann die Lernrate $\eta$ beispielsweise um einen vorgebbaren Lernratenreduktionsfaktor $D\eta$ (z.B. $D\eta = 1/10$) reduziert werden (also $\eta \leftarrow \eta \cdot D\eta$), sofern eine Anzahl der durchlaufenen Epochen durch eine vorgebbare Epochenanzahl, beispielsweise 5, teilbar ist.

Dann (1400) werden die Parameter $\theta$ mittels des ermittelten und ggf. skalierten Gradienten g und der Lernrate $\eta$ aktualisiert. Beispielsweise werden die Parameter $\theta$ ersetzt durch $\theta - \eta \cdot g$.

Es wird nun (1500) mittels eines vorgebbaren Konvergenzkriteriums geprüft, ob das Verfahren konvergiert ist. Beispielsweise kann abhängig von einer absoluten Änderung der Parameter $\theta$ (z.B. zwischen den letzten beiden Epochen) entschieden werden, ob das Konvergenzkriterium erfüllt ist, oder nicht. Beispielsweise kann das Konvergenzkriterium genau dann erfüllt sein, wenn eine $L^2$-Norm über die Änderung aller Parameter $\theta$ zwischen den letzten beiden Epochen kleiner ist als ein vorgebbarer Konvergenzschwellwert.

Wurde entschieden, dass das Konvergenzkriterium erfüllt ist, werden die Parameter $\theta$ als gelernte Parameter

übernommen, und das Verfahren endet. Falls nicht, wird zurückverzweigt zu Schritt 1100.

Figur 12 illustriert in einem Flussdiagramm ein beispielhaftes Verfahren zur Ermittlung des Gradienten *g* in Schritt 1100.

Zunächst (1110) soll eine vorgebbare Anzahl *bs* an Paaren ($x_i$, $y_i$) des Trainingsdatensatzes *X* (ohne Zurücklegen) gezogen, also ausgewählt und einem Stapel *B* (Englisch: "batch") zugewiesen. Die vorgebbare Anzahl *bs* wird auch als Stapelgröße (Englisch: "batch size") bezeichnet. Der Stapel *B* wird als leere Menge initialisiert.

Dazu wird geprüft (1120), ob die Stapelgröße *bs* größer ist als die Anzahl an Paaren ($x_i$, $y_i$), die in der zweiten Menge *N* vorhanden sind.

Ist die Stapelgröße *bs* nicht größer als die Anzahl an Paaren ($x_i$, $y_i$), die in der zweiten Menge *N* vorhanden sind, werden *bs* viele Paare ($x_i$, $y_i$) zufällig aus der zweiten Menge *N* gezogen (1130), also ausgewählt und dem Stapel *B* hinzugefügt.

Ist die Stapelgröße *bs* größer als die Anzahl an Paaren ($x_i$, $y_i$), die in der zweiten Menge *N* vorhanden sind, werden sämtliche Paare der zweiten Menge *N,* deren Anzahl mit *s* bezeichnet wird, gezogen (1140), also ausgewählt und dem Stapel *B* hinzugefügt, und die restlichen, also *bs - s* viele, aus der ersten Menge *G* gezogen also ausgewählt und dem Stapel *B* hinzugefügt.

Für alle Parameter $\theta$ wird anschließend (1150) an Schritt (1130) bzw. (1140) optional entschieden, ob diese Parameter $\theta$ in diesem Trainingsdurchgang übergangen werden sollen, oder nicht. Hierzu wird beispielsweise für jede Schicht ($S_1$, $S_2$, ... , $S_6$) separat eine Wahrscheinlichkeit festgelegt, mit der Parameter $\theta$ dieser Schicht übergangen werden. Beispielsweise kann diese Wahrscheinlichkeit für die erste Schicht ($S_1$) 50% betragen und mit jeder nachfolgenden Schicht um 10% reduziert werden.

Mittels dieser festgelegten jeweiligen Wahrscheinlichkeiten kann dann für jeden der Parameter $\theta$ entschieden werden, ob er übergangen wird, oder nicht.

Für jedes Paar ($x_i$, $y_i$) des Stapels *B* wird nun (1155) optional entschieden, ob das jeweilige Eingangssignal $x_i$ augmentiert wird, oder nicht. Für jedes entsprechende Eingangssignal $x_i$, das augmentiert werden soll, wird, vorzugsweise zufällig, eine Augmentierungsfunktion ausgewählt und auf das Eingangssignal $x_i$ angewendet. Das dermaßen augmentierte Eingangssignal $x_i$ ersetzt dann das ursprüngliche Eingangssignal $x_i$. Ist das Eingangssignal $x_i$ ein Bildsignal kann die Augmentierungsfunktion beispielsweise durch eine Drehung um einen vorgebbaren Winkel gegeben sein.

Anschließend (1160) wird für jedes Paar ($x_i$, $y_i$) des Stapels *B* das entsprechende (und ggf. augmentierte) Eingangssignal $x_i$ ausgewählt und dem neuronalen Netz 60 zugeführt. Die zu übergehenden Parameter $\theta$ des neuronalen Netzes 60 werden hierbei während der Ermittlung des entsprechenden Ausgangssignals deaktiviert, z.B., indem sie vorübergehend auf den Wert Null gesetzt werden. Das entsprechende Ausgangssignal $y(x_i)$ des neuronalen Netzes 60 wird dem entsprechenden Paar ($x_i$, $y_i$) zugeordnet. Abhängig von den Ausgangssignalen $y(x_i)$ und den jeweiligen Ausgangssignalen $y_i$ des Paares ($x_i$, $y_i$) als gewünschtem Ausgangssignal $y_T$ wird jeweils eine Kostenfunktion $\mathcal{L}_i$ ermittelt.

Dann (1165) wird für alle Paare ($x_i$, $y_i$) des Stapels *B* gemeinsam die vollständige Konstenfunktion $\mathcal{L} = \Sigma_{i \in B} \mathcal{L}_i$ ermittelt und jeden der nicht zu übergehenden Parameter $\theta$ die entsprechende Komponente des Gradienten *g* z.B. mittels Rückwärtspropagation (Englisch: "backpropagation") ermittelt. Für jeden der zu übergehenden Parameter $\theta$ wird die entsprechende Komponente des Gradienten *g* auf Null gesetzt.

Nun wird geprüft (1170), ob bei der Prüfung in Schritt 1000, festgestellt wurde, dass die Stapelgröße *bs* größer ist als die Anzahl an Paaren ($x_i$, $y_i$), die in der zweiten Menge *N* vorhanden sind.

Wurde festgestellt, dass Ist die Stapelgröße *bs* nicht größer als die Anzahl an Paaren ($x_i$, $y_i$), die in der zweiten Menge *N* vorhanden sind, werden (1180) alle Paare ($x_i$, $y_i$) des Stapels *B* der ersten Menge *G* hinzugefügt und aus der zweiten Menge *N* entfernt. Es wird nun geprüft, (1185) ob die zweite Menge *N* leer ist. Ist die zweite Menge *N* leer, beginnt eine neue Epoche (1186). Hierzu wird die erste Menge *G* erneut als leere Menge initialisiert, und die zweite Menge *N* wird neu initialisiert, indem ihr erneut alle Paare ($x_i$, $y_i$) des Trainingsdatensatze *X* zugewiesen werden, und es wird verzweigt zu Schritt (1200). Ist die zweite Menge *N* nicht leer, wird direkt verzweigt zu Schritt (1200).

Wurde festgestellt, dass die Stapelgröße *bs* größer ist als die Anzahl an Paaren ($x_i$, $y_i$), die in der zweiten Menge *N* vorhanden sind, wird die erste Menge *G* neu initialisiert (1190), indem ihr alle Paare ($x_i$, $y_i$) des Stapels *B* zugewiesen werden, die zweite Menge *N* wird neu initialisiert, indem ihr erneut alle Paare ($x_i$, $y_i$) des Trainingsdatensatze *X* zugewiesen werden und anschließend die Paare ($x_i$, $y_i$), die auch im Stapels *B* vorhanden sind entfernt werden. Anschließend beginnt eine neue Epoche und es wird verzweigt zu Schritt (1200). Damit endet dieser Teil des Verfahrens.

Figur 13 illustriert in einem Flussdiagramm ein weiteres beispielhaftes Verfahren zur Ermittlung des Gradienten *g* in Schritt 1100. Zunächst werden Parameter des Verfahrens initialisiert (1111). Im Folgenden wird der mathematische Raum der Parameter $\theta$ mit *W* bezeichnet. Umfassen die Parameter $\theta$ also *np* viele einzelne Parameter, so ist der Raum *W* ein *np*-dimensionaler Raum, beispielsweise $W = \mathbb{R}^{np}$. Ein Iterationszähler *n* wird auf den Wert *n* = 0 initialisiert, eine erste Größe $m_1$ wird dann als $m_1 = 0 \in W$ (also als *np*-dimensionaler Vektor) gesetzt, eine zweite Größe $m_2 = 0 \in W \otimes W$ (also als *np* × *np*-dimensionale Matrix).

Anschließend (1121) wird zufällig ein Paar ($x_i$, $y_i$) aus dem Trainingsdatensatz *X* ausgewählt und ggf. augmentiert. Dies kann beispielsweise derart geschehen, dass für jedes Eingangssignal $x_i$ der Paare $(x_i, y_i)$ Trainingsdatensatzes $X$ eine Anzahl $\mu(\alpha(x_i))$ möglicher Augmentierungen $\alpha(x_i)$ ermittelt wird, und jedem Paar $(x_i, y_i)$ eine Positionsgröße

$$p_i = \frac{\sum_{j<i} p_j}{\sum_j p_j} \qquad\qquad (2)$$

zugeordnet wird. Wird dann eine Zufallszahl $\varphi \in [0; 1]$ gleichverteilt gezogen, kann diejenige Positionsgröße $p_i$ ausgewählt werden, die die Ungleichungskette

$$p_i \leq \varphi < p_{i+1} \qquad\qquad (3)$$

erfüllt. Der zugehörige Index $i$ bezeichnet dann das ausgewählte Paar $(x_i, y_i)$, eine Augmentierung $\alpha_i$ der Eingangsgröße $x_i$ kann zufällig aus der Menge möglicher Augmentierungen $\alpha(x_i)$ gezogen werden und auf die Eingangsgröße $x_i$ angewendet werden, d.h. das ausgewählte Paar $(x_i, y_i)$ wird durch $(\alpha_i(x_i), y_i)$ ersetzt.

Das Eingangssignal $x_i$ wird dem neuronalen Netz 60 zugeführt. Abhängig vom entsprechenden Ausgangssignal $y(x_i)$ und dem Ausgangssignal $y_i$ des Paares $(x_i, y_i)$ als gewünschtem Ausgangssignal $y_T$ wird die entsprechende Kostenfunktion $\mathcal{L}_i$ ermittelt. Für die Parameter $\theta$ wird ein diesbezüglicher Gradient $d$ z.B. mittels Rückwärtspropagation ermittelt, also d $= \nabla_\theta \mathcal{L}(y(x_i), y_i)$.

Dann (1131) werden Iterationszähler $n$, erste Größe $m_1$ und zweite Größe $m_2$ wie folgt aktualisert:

$$n \leftarrow n + 1 \qquad\qquad (4)$$
$$t = \frac{1}{n}$$

$$m_1 = (1-t) \cdot m_1 + t \cdot d \qquad\qquad (5)$$

$$m_2 = (1-t) \cdot m_2 + t \cdot (d \cdot d^T) \qquad\qquad (6)$$

Anschließend (1141) werden Komponenten $C_{a,b}$ einer Kovarianzmatrix $C$ bereitgestellt als

$$C_{a,b} = \frac{1}{n}(m_2 - m_1 \cdot m_1^T)_{a,b} \qquad . \qquad\qquad (7)$$

Hieraus wird mit der (vektorwertigen) ersten Größe $m_1$ ein Skalarprodukt $S$ gebildet, also

$$S = \langle m_1, C^{-1} m_1 \rangle. \qquad\qquad (8)$$

Es versteht sich, dass für die ausreichend genaue Ermittlung des Skalarprodukts $S$ mit Gleichung (8) nicht alle Einträge der Kovarianzmatrix $C$ oder der Inversen $C^{-1}$ gleichzeitig vorliegen müssen. Speichereffizienter ist es, während der Auswertung von Gleichung (8) die dann notwendigen Einträge $C_{a,b}$ der Kovarianzmatrix $C$ zu bestimmen.

Dann wird überprüft (1151), ob dieses Skalarprodukt $S$ die folgende Ungleichung erfüllt:

$$S \geq \lambda^2, \qquad\qquad (9)$$

wobei $\lambda$ ein vorgebbarer Schwellwert ist, der einem Konfidenzlevel entspricht.

Ist die Ungleichung erfüllt, wird der aktuelle Wert der ersten Größe $m_1$ als geschätzter Gradient $g$ übernommen und es wird zurückverzweigt zu Schritt (1200).

Ist die Ungleichung nicht erfüllt, kann zu Schritt (1121) zurückverzweigt werden. Es kann alternativ auch überprüft (1171) werden, ob der Iterationszähler $n$ einen vorgebbaren maximalen Iterationswert $n_{max}$ erreicht hat. Ist dies nicht der Fall, wird zurückverzweigt zu Schritt (1121), andernfalls wird als geschätzter Gradient $g$ der Nullvektor $0 \in W$ übernommen (1181), und es wird zurückverzweigt zu Schritt (1200). Damit endet dieser Teil des Verfahrens.

Durch dieses Verfahren wird erreicht, dass $m_1$ einem arithmetischen Mittelwert der ermittelten Gradienten $d$ über den gezogenen Paaren $(x_i, y_i)$ entspricht, und $m_2$ einem arithmetischen Mittelwert eines Matrixprodukts $d \cdot d^T$ der ermittelten Gradienten d über den gezogenen Paaren $(x_i, y_i)$.

Figur 14 zeigt eine Ausführungsform des Verfahrens zum Skalieren des Gradienten *g* in Schritt (1200). Im Folgenden wird jede Komponente des Gradienten *g* mit einem Paar ($\iota$, *l*) bezeichnet, wobei $\iota \in \{1, ..., k\}$ eine Schicht des entsprechenden Parameters $\theta$ bezeichnet, und $l \in \{1, ..., dim(V_i)\}$ eine Nummerierung des entsprechenden Parameters $\theta$ innerhalb der $\iota$-ten Schicht. Ist das neuronale Netz wie in Figur 10 illustriert zur Verarbeitung mehrdimensionaler Eingangsdaten *x* mit entsprechenden Merkmalskarten $Z_\iota$ in der $\iota$-ten Schicht ausgebildet, ist die Numerierung *l* vorteilhafterweise durch die Position desjenigen Merkmals in der Merkmalskarte $Z_\iota$ gegeben, mit dem der entsprechende Parameter $\theta$ assoziiert ist.

Es wird nun (1220) für jede Komponente $g_{\iota,l}$ des Gradienten *g* ein Skalierungsfaktor $\Omega_{\iota,l}$ ermittelt. Beispielsweise kann dieser Skalierungsfaktor $\Omega_{\iota,l}$ durch die Größe des rezeptiven Feldes rF des *l* entsprechenden Merkmals der Merkmalskarte der $\iota$-ten Schicht gegeben sein. Der Skalierungsfaktor $\Omega_{\iota,l}$ kann alternativ auch durch ein Verhältnis der Auflösungen, also der Anzahl Merkmale, der $\iota$-ten Schicht im Verhältnis zur Eingangsschicht gegeben sein.

Dann (1220) wird jede Komponente $g_{\iota,l}$ des Gradienten g mit dem Skalierungsfaktor $\Omega_{\iota,l}$ skaliert, also

$$g_{\iota,l} \leftarrow g_{\iota,l}/\Omega_{\iota,l}. \qquad (10)$$

Ist der Skalierungsfaktor $\Omega_{\iota,l}$ durch die Größe des rezeptiven Feldes rF gegeben, lässt sich besonders wirksam eine Überanpassung der Parameter $\theta$ vermeiden. Ist der Skalierungsfaktor $\Omega_{\iota,l}$ durch das Verhältnis der Auflösungen gegeben, ist dies eine besonders effiziente näherungsweise Schätzung der Größe des rezeptiven Feldes rF.

Figur 15 illustriert das Verfahren, dass von der Skalierungsschicht $S_4$ ausgeführt wird.

Die Skalierungsschicht $S_4$ ist eingerichtet, eine Projektion des am Eingang der Skalierungsschicht $S_4$ anliegenden Eingangssignals x auf eine Kugel zu erreichen, mit Radius $\rho$ und Mittelpunkt *c*. Dies wird charakterisiert durch eine erste Norm $N_1(y - c)$, die einen Abstand des Mittelpunkts c vom am Ausgang der Skalierungsschicht $S_4$ anliegenden Ausgangssignal y misst und eine zweite Norm $N_2(x - y)$, die einen Abstand des am Eingang der Skalierungsschicht $S_4$ anliegenden Eingangssignals x vom am Ausgang der Skalierungsschicht $S_4$ anliegenden Ausgangssignal y misst. Mit anderen Worten löst das am Ausgang der Skalierungsschicht $S_4$ anliegende Ausgangssignal y die Gleichung

$$y = argmin_{N_1(y-c)\leq\rho} N_2(x - y). \qquad (11)$$

Figur 15 a) illustriert eine besonders effiziente erste Ausführungsform für den Fall, dass erste Norm $N_1$ und eine zweite Norm $N_2$ gleich sind. Sie werden im Folgenden mit $\|\cdot\|$ bezeichnet.

Zunächst (2000) wird ein am Eingang der Skalierungsschicht $S_4$ anliegendes Eingangssignal x, ein Zentrumsparameter *c* und ein Radiusparameter $\rho$ bereitgestellt.

Dann (2100) wird ein am Ausgang der Skalierungsschicht $S_4$ anliegendes Ausgangssignal y ermittelt zu

$$y = c + \frac{\rho \cdot (x-c)}{\max(\rho, \|x-c\|)}. \qquad (12)$$

Damit endet dieser Teil des Verfahrens.

Figuren 15b) und 15c) illustrieren Ausführungsformen für besonders vorteilhaft gewählte Kombinationen der ersten Norm $N_1$ und der zweiten Norm $N_2$.

Figur 15 b) illustriert eine zweite Ausführungsform für den Fall, dass in der zu erfüllenden Bedingung (12) die erste Norm $N_1(\cdot)$ gegeben ist durch die Maximumsnorm $\|\cdot\|_\infty$ und die zweite Norm $N_2(\cdot)$ gegeben ist durch die 2-Norm $\|\cdot\|_2$. Diese Kombination von Normen ist besonders effizient zu berechnen.

Zunächst (3000) wird analog zu Schritt (2000) das am Eingang der Skalierungsschicht $S_4$ anliegende Eingangssignal x, der Zentrumsparameter *c* und der Radiusparameter $\rho$ bereitgestellt.

Dann (3100) werden die Komponenten $y_i$ des am Ausgang der Skalierungsschicht $S_4$ anliegenden Ausgangssignals y ermittelt zu

$$y_i = \begin{cases} c_i + \rho & \text{falls } x_i - c_i > \rho \\ c_i - \rho & \text{falls } x_i - c_i < -\rho \, , \\ x_i & sonst \end{cases} \qquad (13)$$

wobei $i$ hier die Komponenten bezeichnet.

Dieses Verfahren ist besonders recheneffizient. Damit endet dieser Teil des Verfahrens.

Figur 15 c) illustriert eine dritte Ausführungsform für den Fall, dass in der zu erfüllenden Bedingung (12) die erste Norm $N_1(\cdot)$ gegeben ist durch die 1-Norm $\|\cdot\|_1$ und die zweite Norm $N_2(\cdot)$ gegeben ist durch die 2-Norm $\|\cdot\|_2$. Diese Kombination von Normen führt dazu, dass im am Eingang der Skalierungsschicht $S_4$ anliegenden Eingangssignal x möglichst viele kleine Komponenten auf den Wert Null gesetzt werden.

Zunächst (4000) werden analog zu Schritt (2000) das am Eingang der Skalierungsschicht $S_4$ anliegende Eingangssignal x, der Zentrumsparameter $c$ und der Radiusparameter $\rho$ bereitgestellt.

Dann (4100) wird eine Vorzeichengröße $\varepsilon_i$ ermittelt zu

$$\epsilon_i = \begin{cases} +1 & \text{falls } x_i \geq c_i \\ -1 & \text{falls } x_i < c_i \end{cases} \qquad (14)$$

und die Komponenten $x_i$ des am Eingang der Skalierungsschicht $S_4$ anliegenden Eingangssignals x werden ersetzt durch

$$x_i \leftarrow \epsilon_i \cdot (x_i - c_i). \qquad (15)$$

Ein Hilfsparameter $\gamma$ wird auf den Wert Null initialisiert.

Dann (4200) wird eine Menge $N$ ermittelt als $N = \{i | x_i > \gamma\}$ und ein Abstandsmaß $D = \Sigma_{i \in N}(x_i - \gamma)$.

Dann (4300) wird überprüft, ob die Ungleichung

$$D > \rho \qquad (16)$$

erfüllt ist.

Ist dies der Fall (4400), wird der Hilfsparameter $\gamma$ ersetzt durch

$$\gamma \leftarrow \gamma + \frac{D-\rho}{|N|}, \qquad (17)$$

und es wird zurückverzweigt zu Schritt (4200).

Ist Ungleichung (16) nicht erfüllt (4500), werden die Komponenten $y_i$ des am Ausgang der Skalierungsschicht $S_4$ anliegendn Ausgangssignals y ermittelt zu

$$y_i = c_i + \epsilon_i \cdot (x_i - \gamma)_+ \qquad (18)$$

Die Notation $(\cdot)_+$ bedeutet hierbei in üblicher Weise

$$(\xi)_+ = \begin{cases} \xi & \text{falls } \xi > 0 \\ 0 & \text{sonst} \end{cases}. \qquad (19)$$

Damit endet dieser Teil des Verfahrens. Dieses Verfahren entspricht einem Newton-Verfahren, und ist besonders recheneffizient, insbesondere, wenn viele der Komponenten des am Eingang der Skalierungsschicht $S_4$ anliegenden Eingangssignals x wichtig sind.

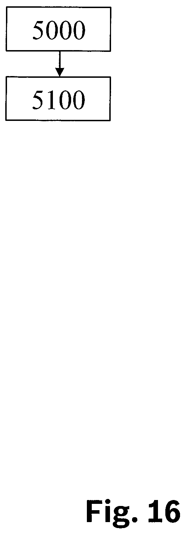

Figur 16 illustriert eine Ausführungsform eines Verfahrens zum Betreiben des neuronalen Netzes 60. Zunächst (5000) wird das neuronale Netz mit einem der beschriebenen Verfahren trainiert. Dann (5100) wird das Steuerungssystem 40 mit dem so trainierten neuronalen Netz 60 wie beschrieben betrieben. Damit endet das Verfahren.

Es versteht sich, dass das neuronale Netz nicht auf vorwärts gerichtete neuronale Netze (Englisch: "feedforward neural network") beschränkt ist, sondern dass die Erfindung in gleicher Weise auf jegliche Art neuronaler Netze angewendet werden kann, insbesondere rekurrente Netze, Faltungsnetze (Englisch: "convolutional neural network"), Autoencoder, Boltzmann-Maschinen, Perzeptronen oder Kapselnetze (Englisch: "Capsule Neural Network).

Der Begriff "Computer" umfasst beliebige Geräte zur Abarbeitung vorgebbarer Rechenvorschriften. Diese Rechenvorschriften können in Form von Software vorliegen, oder in Form von Hardware, oder auch in einer Mischform aus Software und Hardware.

Es versteht sich ferner, dass die Verfahren nicht nur wie beschrieben vollständig in Software implementiert sein können. Sie können auch in Hardware implementiert sein, oder in einer Mischform aus Software und Hardware.

**Patentansprüche**

1. Computerimplementiertes Verfahren zum Klassifizieren von Eingangssignalen (x), welche abhängig von einem Ausgangssignal (S) eines Sensors (30) ermittelt wurden, mittels einem neuronalen Netz (60),

   wobei der Sensor (30) ein bildgebender Sensor ist, insbesondere ein optischer Sensor wie ein Bildsensor oder ein Videosensor, oder ein Radarsensor, oder ein Ultraschallsensor, oder ein LiDAR-Sensor, oder ein akustischer Sensor, oder ein Positionssensor oder ein kinematischen Sensor,
   wobei ein Ansteuersignal (A) abhängig von einem Ausgangssignal (y) des neuronalen Netzes (60) ermittelt wird,
   wobei abhängig von dem Ansteuersignal (A) ein Aktor (10) angesteuert wird, wobei das neuronale Netz (60) eine Skalierungsschicht ($S_4$) umfasst, wobei die Skalierungsschicht ein am Eingang der Skalierungsschicht ($S_4$) anliegendes Eingangssignal ($z_4$) derart auf ein am Ausgang der Skalierungsschicht ($S_4$) anliegendes Ausgangssignal ($z_5$) abbildet, dass diese Abbildung einer Projektion des Eingangssignals ($z_4$) auf einen vorgebbaren Wertebereich entspricht, **dadurch gekennzeichnet,**
   **dass** Parameter ($\rho$, $c$), die die Abbildung charakterisieren, vorgebbar sind, und dass die Abbildung durch die Gleichung
   $z_5 = argmin_{N_1(z_5-c) \leq \rho} N_2(z_4 - z_5)$ mit einer ersten Norm ($N_1$) und einer zweiten Norm ($N_2$) gegeben ist, und
   **dass** in einer Trainingsphase die vorgebbaren Parameter ($\rho$, $c$), abhängig von einem Verfahren zum Trainieren des neuronalen Netzes (60) angepasst wurden, und dass beim Trainieren ein Anpassen dieser vorgebbaren Parameter ($\rho$, $c$), abhängig von einem Ausgangssignal (y) des neuronalen Netzes (60) bei Zuführung eines Eingangssignals (x) des neuronalen Netzes (60) und einem zugehörigen gewünschten Ausgangssignal ($y_T$) geschah, und dass das Anpassen der vorgebbaren Parameter abhängig von einem ermittelten Gradienten ($g$) geschah, der abhängig von dem Ausgangssignal (y) des neuronalen Netzes (60) und dem zugehörigen gewünschten Ausgangssignal ($y_T$) war.

2. Verfahren nach Anspruch 1, wobei die erste Norm ($N_1$) und die zweite Norm ($N_2$) gleich gewählt sind.

3. Verfahren nach Anspruch 1, wobei die erste Norm ($N_1$) eine $L^\infty$-Norm ist.

4. Verfahren nach Anspruch 1, wobei die erste Norm ($N_1$) eine $L^1$-Norm ist.

5. Verfahren nach Anspruch 3 oder 4, wobei die zweite Norm ($N_2$) eine $L^2$-Norm ist.

6. Verfahren nach Anspruch 5, wobei die Lösung der Gleichung $z_5 = argmin_{N_1(z_5-c) \leq \rho} N_2(z_4 - z_5)$ mittels eines deterministischen Newton-Verfahrens erfolgt.

7. Computerprogramm, umfassend Befehle, die bei der Ausführung des Programms durch einen Computer diesen veranlassen, das Verfahren nach einem der Ansprüche 1 bis 6 auszuführen.

8. Maschinenlesbares Speichermedium (46, 146), auf dem das Computerprogramm nach Anspruch 7 gespeichert ist.

9. Aktorsteuerungssystem (40), welches eingerichtet ist, das Verfahren nach einem der Ansprüche 1 bis 6 auszuführen.

**Claims**

1. Computer-implemented method for classifying input signals (x), which were ascertained dependent on an output signal (S) of a sensor (30), by means of a neural network (60),

   wherein the sensor (30) is an imaging sensor, in particular an optical sensor such as an image sensor or a video sensor, or a radar sensor or an ultrasonic sensor or a LiDAR sensor or an acoustic sensor or a position sensor or a kinematic sensor,
   wherein a control signal (A) is ascertained dependent on an output signal (y) of the neural network (60),
   where an actuator (10) is controlled on the basis of the control signal (A),
   wherein the neural network (60) comprises a scaling layer ($S_4$), wherein the scaling layer maps an input signal ($z_4$) present at the input of the scaling layer ($S_4$) onto an output signal ($z_5$) present at the output of the scaling layer ($S_4$), in such a way that this map corresponds to a projection of the input signal ($z_4$) onto a predeterminable value range, **characterized**

in that parameters ($\rho$, $c$) that characterize the map are predeterminable, and in that the map is represented by the equation

$z_5 = argmin_{N_1(z_5-c)\leq\rho}N_2(z_4 - z_5)$ with a first norm ($N_1$) and a second norm ($N_2$), and

in that in a training phase the predeterminable parameters ($\rho$, $c$) were adapted on the basis of a method for training the neural network (60), and in that during training these predeterminable parameters ($\rho$, $c$), were adapted on the basis of an output signal (y) of the neural network (60) when an input signal (x) of the neural network (60) and an associated desired output signal ($y_T$) were supplied, and the predeterminable parameters were adapted on the basis of an ascertained gradient (g) that depended on the output signal (y) of the neural network (60) and the associated desired output signal ($y_T$).

2. Method according to Claim 1, wherein the first norm ($N_1$) and the second norm ($N_2$) are chosen to be the same.

3. Method according to Claim 1, wherein the first norm ($N_1$) is an $L^\infty$ norm.

4. Method according to Claim 1, wherein the first norm ($N_1$) is an $L^1$ norm.

5. Method according to Claim 3 or 4, wherein the second norm ($N_2$) is an $L^2$ norm.

6. Method according to Claim 5, wherein the equation
$z_5 = argmin_{N_1(z_5-c)\leq\rho}N_2(z_4 - z_5)$ is solved by means of a deterministic Newton's method.

7. Computer program comprising instructions which, when the program is executed by a computer, cause said computer to carry out the method according to any of Claims 1 to 6.

8. Machine-readable storage medium (46, 146) on which the computer program according to Claim 7 is stored.

9. Actuator control system (40) configured to carry out the method according to any of Claims 1 to 6.

**Revendications**

1. Procédé mis en œuvre par ordinateur pour classifier des signaux d'entrée (x), qui ont été déterminés en fonction d'un signal de sortie (S) d'un capteur (30), au moyen d'un réseau neuronal (60),

le capteur (30) étant un capteur d'imagerie, en particulier un capteur optique tel qu'un capteur d'image ou un capteur vidéo, ou un capteur radar, ou un capteur à ultrasons, ou un capteur LiDAR, ou un capteur acoustique, ou un capteur de position ou un capteur cinématique,
un signal de commande (A) étant déterminé en fonction d'un signal de sortie (y) du réseau neuronal (60),
un actionneur (10) étant commandé en fonction du signal de commande (A),
le réseau neuronal (60) comprenant une couche de mise à l'échelle ($S_4$), la couche de mise à l'échelle reproduisant un signal d'entrée ($z_4$), présent à l'entrée de la couche de mise à l'échelle ($S_4$), en un signal de sortie ($z_5$) présent à la sortie de la couche de mise à l'échelle ($S_4$), de telle manière que cette reproduction corresponde à une projection du signal d'entrée ($z_4$) sur une plage de valeurs prédéfinissable, **caractérisé en ce que**
des paramètres ($\rho$, $c$), qui caractérisent la reproduction, peuvent être prédéfinis, et **en ce que** la reproduction est donnée par l'équation
$z_5 = argmin_{N_1(z_5-c)\leq\rho}N_2(z_4 - z_5)$ avec une première norme ($N_1$) et une deuxième norme ($N_2$), et
**en ce que**, dans une phase d'apprentissage, les paramètres prédéfinissables ($\rho$, $c$) ont été ajustés en fonction d'un procédé d'apprentissage du réseau neuronal (60), et **en ce que**, lors de l'apprentissage, un ajustement de ces paramètres prédéfinissables ($\rho$, $c$) a eu lieu en fonction d'un signal de sortie (y) du réseau neuronal (60) lors de la fourniture d'un signal d'entrée (x) du réseau neuronal (60) et d'un signal de sortie souhaité associé ($y_T$), et **en ce que** l'ajustement des paramètres prédéfinissables a eu lieu en fonction d'un gradient (g) déterminé, qui dépendait du signal de sortie (y) du réseau neuronal (60) et du signal de sortie ($y_T$) souhaité associé.

2. Procédé selon la revendication 1, dans lequel la première norme ($N_1$) et la deuxième norme ($N_2$) sont choisies identiques.

3. Procédé selon la revendication 1, dans lequel la première norme ($N_1$) est une norme $L^\infty$.

**4.** Procédé selon la revendication 1, dans lequel la première norme ($N_1$) est une norme $L^1$.

**5.** Procédé selon la revendication 3 ou 4, dans lequel la deuxième norme ($N_2$) est une norme $L^2$.

**6.** Procédé selon la revendication 5, dans lequel la solution de l'équation $z_5 = argmin_{N_1(z_5-c)\leq\rho}N_2(z_4 - z_5)$ est obtenue au moyen d'un procédé de Newton
déterministe.

**7.** Programme informatique comprenant des instructions qui, lors de l'exécution du programme par un ordinateur, amènent ce dernier à mettre en œuvre le procédé selon l'une des revendications 1 à 6.

**8.** Support de stockage lisible par machine (46, 146), sur lequel est enregistré le programme informatique selon la revendication 7.

**9.** Système de commande d'actionneur (40), qui est conçu pour mettre en œuvre le procédé selon l'une des revendications 1 à 6.

**Fig. 1**

EP 3 899 809 B1

EP 3 899 809 B1

**Fig. 2**

**Fig. 3**

EP 3 899 809 B1

249      30      40      250

**Fig. 4**

EP 3 899 809 B1

**Fig. 5**

**Fig. 6**

**Fig. 7**

EP 3 899 809 B1

**Fig. 8**

EP 3 899 809 B1

**Fig. 9**

EP 3 899 809 B1

**Fig. 10**

EP 3 899 809 B1

EP 3 899 809 B1

**Fig. 11**

**Fig. 12**

EP 3 899 809 B1

**Fig. 13**

EP 3 899 809 B1

```
        ( 1200 )
            |
            v
       +----------+
       |   1210   |
       +----------+
            |
            v
       +----------+
       |   1220   |
       +----------+
            |
            v
        ( 1300 )
```

**Fig. 14**

EP 3 899 809 B1

a)

```
┌──────────┐
│   2000   │
└────┬─────┘
     │
     ▼
┌──────────┐
│   2100   │
└──────────┘
```

b)

```
┌──────────┐
│   3000   │
└────┬─────┘
     │
     ▼
┌──────────┐
│   3100   │
└──────────┘
```

c)

```
┌──────────┐
│   4000   │
└────┬─────┘
     │
     ▼
┌──────────┐
│   4100   │
└────┬─────┘
     │
     ▼
┌──────────┐          ┌──────────┐
│   4200   │◄─────────┤          │
└────┬─────┘          │          │
     │                │          │
     ▼                │          │
   ◇4300◇────────────►│   4400   │
     │                └──────────┘
     ▼
┌──────────┐
│   4500   │
└──────────┘
```

**Fig. 15**

EP 3 899 809 B1

```
┌─────────────┐
│    5000     │
└─────────────┘
       │
       ▼
┌─────────────┐
│    5100     │
└─────────────┘
```

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GEOFFREY E. HINTON** ; **NITISH SRIVASTAVA** ; **ALEX KRIZHEVSKY** ; **IIYA SUTSKEVER** ; **RUSLAN R. SALAKHUTDINOV**. Improving neural networks by preventing co-adaptation of feature detectors. *arXiv preprint arXiv:1207.0580v1*, 2012

- **SERGEY LOFFE** ; **CHRISTIAN SZEGEDY**. Batch Normalization: Accelerating Deep Network Training by Reducing Internal Covariate Shift. *arXiv preprint arXiv:1502.03167v3*, 2015
- Norm matters: efficient and accurate normalization schemes in deep networks. **HOFFER et al.** ARXIV.ORG. CORNELL UNIVERSITY LIBRARY, 05 March 2018